# EUROPEAN PATENT APPLICATION

(11) **EP 4 811 446 A1**
(43) Date of publication of application: **23.09.2026**
(21) Application number: 24908093.8
(22) Date of filing: 18.12.2024
(51) Int. Cl.: H01M 4/36, H01M 4/48, H01M 4/62, H01M 4/38, H01M 10/052, H01M 4/02

(54) **NEGATIVE ELECTRODE MATERIAL FOR LITHIUM SECONDARY BATTERY AND SECONDARY BATTERY COMPRISING SAME**

(30) Priority: 18.12.2023 KR 20230185210; 21.11.2024 KR 20240167475
(71) Applicant: POSCO Silicon Solution Co., Ltd, Pohang-si Gyeongsangbuk-do 37948 (KR)
(72) Inventor: CHO, Moon-Kyu, Pohang-si, Gyeongsangbuk-do 37948 (KR); CHOI, Sun-Ho, Pohang-si, Gyeongsangbuk-do 37948 (KR); CHEON, Jung-Hoon, Pohang-si, Gyeongsangbuk-do 37948 (KR)
(74) Representative: Lorenz Seidler Gossel Part. mbB
(86) International application number: PCT/KR2024/020651
(87) International publication number: WO 2025/135810

(57) **Abstract**

The present disclosure relates to a negative electrode material for a secondary battery and a secondary battery comprising the same, and the negative electrode material for a secondary battery, according to the present disclosure, comprises a silicon-based core and a carbon coating layer located on the surface of the silicon-based core, and may have high output, excellent cycle characteristics, and uniform electrochemical characteristics.

## Description

### Technical Field

The present disclosure relates to a negative electrode material for a secondary battery and a secondary battery comprising the same.

### Background Art

In various industrial sectors such as electronics, electric vehicles (EVs), energy storage systems (ESS), and aerospace/drones, there is a growing demand for secondary batteries with high energy density and high power density, as well as long capacity retention.

Generally, rechargeable lithium secondary batteries consist of a positive electrode, a negative electrode, an electrolyte, and a separator. Among these, graphite is the most commonly used negative electrode material in commercial applications; however, its theoretical maximum capacity is only 372 mAh/g.

To implement secondary batteries with high energy density, research has been continuously conducted to use chalcogenide-based materials such as sulfur (maximum capacity: 1,675 mAh/g), silicon-based materials such as silicon (maximum capacity: 4,200 mAh/g) or silicon oxides (maximum capacity: 1,500 mAh/g), and transition metal oxides as negative electrode materials for secondary batteries. Among various materials, silicon-based negative electrode materials are attracting the most attention due to their high theoretical capacity, low reaction potential with lithium, and eco-friendly nature.

However, when particulate silicon is used as the negative electrode material, repeated charge/discharge cycling causes the battery's performance to deteriorate rapidly due to insulation issues resulting from the silicon's significant volume changes, particle shedding, and increased contact resistance, ultimately leading to the loss of the battery's function. Meanwhile, in the case of silicon oxides, lithium is lost due to irreversible products such as lithium silicate and lithium oxide, leading to a sharp decline in initial coulombic efficiency.

To solve the problems of such silicon-based negative electrode materials, a negative electrode material is disclosed in which a carbon coating layer is formed on the surface of a metal-doped silicon oxide negative electrode material through chemical vapor deposition (CVD). However, this negative electrode material requires the use of expensive hydrocarbon gases, and its conversion efficiency to carbon is low within the temperature range that suppresses the growth of the silicon phase, resulting in low economic feasibility. In addition, it is difficult to uniformly coat the surfaces of silicon oxide particles with this negative electrode material during mass production.

Furthermore, the CVD coating process has a feature in which hydrocarbon gas is continuously supplied from the outside and heat is supplied through the outer wall of the reactor, so a temperature gradient inevitably occurs inside the reactor. Furthermore, since the hydrocarbon decomposition reaction is endothermic, the temperature gradient increases as the silicon oxide particles move away from the heat source, resulting in a decrease in the uniformity of the deposited carbon coating layer.

The non-uniformity of this carbon coating layer leads to non-uniformity in the electrochemical properties of the negative electrode material, which has an undesirable effect on the initial coulombic efficiency, cycle characteristics, and capacity retention. Therefore, there remains a need to develop silicon-based negative electrode materials for secondary batteries that exhibit excellent initial coulombic efficiency, cycle characteristics, and capacity retention, as well as high-power performance.

### Disclosure of Invention

### Technical Problem

In one aspect of the present disclosure, a silicon-based negative electrode material for a secondary battery having improved initial coulombic efficiency, cycle characteristics, and capacity retention, as well as a lithium secondary battery comprising the same, may be provided.

In one aspect of the present disclosure, a silicon-based negative electrode material for a secondary battery and a lithium secondary battery comprising the same may be provided, in which the electrochemical properties between the negative electrode material particles are not only uniform but also the electrochemical properties within the negative electrode material particles are uniform.

The objects of the present disclosure are not limited to the foregoing. A person skilled in the art to which the present disclosure pertains will have no difficulty in understanding additional objectives of the present disclosure from the overall content of this specification.

### Solution to Problem

The negative electrode material for a secondary battery according to one embodiment of the present disclosure comprises: a silicon-based core; and a carbon coating layer disposed on a surface of the silicon-based core, wherein the silicon-based core comprises a matrix comprising silicon oxide; and silicon nanocrystals dispersedly embedded in the matrix.

The negative electrode material for a secondary battery according to the embodiment satisfies Equation 1 and Equation 2 below.$WN {\left(Si\right)}_{MAX} - WN {\left(Si\right)}_{MIN} \leq 7 {cm}^{- 1}$

In Equation 1, WN(Si) is a wavenumber corresponding to a maximum scattering intensity in a Raman spectrum, which is located in a wavenumber region of 460 cm⁻¹ to 560 cm⁻¹, of the silicon-based core, and WN(Si)_{MAX} and WN(Si)_{MIN} are a maximum value and a minimum value of WN(Si) calculated from each of the Raman spectra measured at 10 different locations.${W}_{AVE} \leq 17 {cm}^{- 1}$

In Equation 2, W_{AVE} is an average value of widths of the Raman spectra corresponding to 75% of a maximum scattering intensity value based on a Raman scattering intensity at a wavenumber of 560 cm⁻¹ in each of the Raman spectra measured at the 10 different locations.

In the negative electrode material for a secondary battery according to one embodiment, in a Raman spectrum of the negative electrode material, an intensity ratio (I_{D}/I_{G}) of a D-band peak to a G-band peak may be less than a full width at half maximum (FWHM) ratio of the D-band peak to the G-band peak (F_{D}/F_{G}), and the intensity ratio (I_{D}/I_{G}) may be 1.3 or less.

In the negative electrode material for a secondary battery according to one embodiment, the FWHM ratio (F_{D}/F_{G}) of the D-band peak to the G-band peak may be 1.4 or more.

In the negative electrode material for a secondary battery according to one embodiment, the FWHM of the G-band peak (F_{G}) may be 60 cm⁻¹ or more.

In the negative electrode material for a secondary battery according to one embodiment, the standard deviation of the W_{AVE} may be 5 cm⁻¹ or less.

In the negative electrode material for a secondary battery according to one embodiment, the negative electrode material may further satisfy Equation 3 below.$1 > WN {\left(Si\right)}_{AVE} / WN \left(ref\right)$

In Equation 3, WN(Si)_{AVE} is the average value of WN(Si), and WN(ref) is the wavenumber corresponding to the maximum scattering intensity in the Raman spectrum of bulk single-crystal silicon in the wavenumber range of 460 cm⁻¹ to 560 cm⁻¹.

In the negative electrode material for a secondary battery according to one embodiment, a specific surface area of the negative electrode material may be 10 m²/g or less.

In the negative electrode material for a secondary battery according to one embodiment, the carbon coating layer may comprise a plurality of carbon nanoparticles.

In the negative electrode material for a secondary battery according to one embodiment, the carbon coating layer may comprise a dispersed phase comprising a plurality of carbon nanoparticles; and a continuous phase consisting of carbon and physically binding the dispersed phase.

In the negative electrode material for a secondary battery according to one embodiment, the carbon coating layer may be contained in an amount of 0.5 to 8 wt% based on a total weight of the negative electrode material.

In the negative electrode material for a secondary battery according to one embodiment, the carbon coating layer may be derived from coal tar or petroleum-based residue.

In the negative electrode material for a secondary battery according to one embodiment, a D₁ particle size of the negative electrode material may be 0.8 to 5 µm, and D₁₀/D₁ may be 1 to 3.

In the negative electrode material for a secondary battery according to one embodiment, a D₉₀ particle size of the negative electrode material may be 8.5 to 25 µm, and D₉₉/D₉₀ may be 1.1 to 3.

A secondary battery according to an embodiment of the present disclosure may comprise the negative electrode material for a secondary battery described above.

### Advantageous Effects of Invention

The silicon-based negative electrode material for a secondary battery according to one embodiment of the present disclosure may have a high initial capacity and may have excellent initial coulombic efficiency and capacity retention.

The silicon-based negative electrode material for a secondary battery according to one embodiment of the present disclosure may have uniform electrochemical characteristics at any location within a single negative electrode material particle, and furthermore, may have uniform electrochemical characteristics even between negative electrode material particles.

### Brief Description of Drawings

FIG. 1 is a graph showing a Raman spectrum of the silicon-based core of a negative electrode material for a secondary battery according to an embodiment of the present disclosure.
FIG. 2 is a graph showing a Raman spectrum of a negative electrode material for a secondary battery according to an embodiment of the present disclosure.
FIG. 3 is a graph showing a Raman spectrum of a negative electrode material for a secondary battery according to a comparative example of the present disclosure.

### Mode for Carrying out the Invention

Hereinafter, preferred embodiments of the present disclosure will be described with reference to the accompanying drawings. However, the embodiments of the present disclosure may be modified in various other forms, and the scope of the present disclosure is not limited to the embodiments described below.

Furthermore, the embodiments of the present disclosure are provided to explain the disclosure more fully to those skilled in the art.

The shapes and sizes of the elements in the drawings may be exaggerated for clearer explanation.

In describing the embodiments of the present disclosure, detailed descriptions of prior art related to the present disclosure will be omitted where it is deemed that such descriptions might unnecessarily obscure the essence of the present disclosure. Furthermore, the terms described below are defined in light of their functions in the present disclosure and may vary depending on the intent of the user or operator, or on established conventions. Therefore, the definition should be determined based on the content throughout this specification. The terms used in the detailed description are intended solely to describe embodiments of the present disclosure and should in no way be construed as limiting. Unless otherwise specified, expressions in the singular form include the plural form.

In this description, terms such as "including" or "comprising" are intended to refer to certain characteristics, numbers, steps, actions, elements, or parts thereof or combinations thereof, and should not be construed as excluding the existence or possibility of one or more other characteristics, numbers, steps, actions, elements, or parts thereof or combinations thereof in addition to those described.

Unless otherwise specified in the specification of the present disclosure, the unit "%" refers to weight percent(wt%).

In this specification, terms such as "top", "upper", "upper surface", "lower", "lower surface", and "side" are based on the drawings and may actually vary depending on the direction in which the elements or components are arranged.

In addition, throughout this specification, when it is stated that a certain part is "connected" to another part, this includes not only cases where they are "directly connected," but also cases where they are "indirectly connected" through other elements in between.

The present disclosure will be described in detail below with reference to various embodiments or examples of the disclosure. It should be noted that each embodiment or example described in this specification is not limited to a single embodiment or example, but may also be combined with other embodiments or examples. Therefore, the citation of a claim in the scope of the patent claims is merely an example of an embodiment; the technical concept of the present disclosure should not be interpreted solely in combination with the cited claim, but combinations with various other claims also fall within the scope of the technical concept of the present disclosure.

In this specification, the particle size distribution refers to measurements obtained using a laser diffraction method. To analyze the particle size distribution, a powder sample is dispersed in a dispersing medium and then introduced into a laser diffraction particle size analyzer; and the particle size distribution is calculated by measuring differences in diffraction patterns based on particle size as the particles pass through a laser beam.

The applicant discovered that in a silicon-based negative electrode material in which a carbon coating layer is formed on a silicon-based oxide, the mechanical and electrochemical properties of the negative electrode material are significantly affected by Raman spectroscopic characteristics. Based on these findings, further research revealed that when a negative electrode material comprising a silicon-based core and a carbon coating layer disposed on a surface of the silicon-based core exhibits specific characteristics in its Raman spectrum, its electrochemical properties are significantly enhanced, leading to the completion of the present disclosure.

In the present disclosure, the negative electrode material for a secondary battery includes a negative electrode material for a lithium secondary battery, but is not necessarily limited thereto. The negative electrode material of the present disclosure may also be used as an active material in secondary batteries such as sodium batteries, aluminum batteries, magnesium batteries, calcium batteries, and zinc batteries.

A negative electrode material for a secondary battery according to the present disclosure comprises: a silicon-based core comprising a matrix comprising silicon oxide and silicon nanocrystals dispersedly embedded in the matrix; and a carbon coating layer disposed on a surface of the silicon-based core, wherein the negative electrode material satisfies Equation 1 and Equation 2 below.$WN {\left(Si\right)}_{MAX} - WN {\left(Si\right)}_{MIN} \leq 7 {cm}^{- 1}$

In Equation 1, WN(Si) is a wavenumber corresponding to a maximum scattering intensity in a Raman spectrum, which is located in a wavenumber range of 460 cm⁻¹ to 560 cm⁻¹, of the silicon-based core, and WN(Si)_{MAX} and WN(Si)_{MIN} are a maximum value and a minimum value of WN(Si) calculated from each of the Raman spectra measured at 10 different locations.${W}_{AVE} \leq 17 {cm}^{- 1}$

In Equation 2, W_{AVE} is an average value of widths of the Raman spectra corresponding to 75% of a maximum scattering intensity value based on a Raman scattering intensity at a wavenumber of 560 cm⁻¹ in each of the Raman spectra measured at the 10 different locations.

Experimentally, the Raman spectrum of the silicon-based core may be measured under the following conditions: room temperature (20 to 25°C), atmospheric pressure, an excitation laser wavelength of 532 nm, a laser power of 0.5 mW, a spectrometer resolution of 1 cm⁻¹, 1 g of the negative electrode material, and a detector exposure time of 15 s.

Specifically, in the Raman spectrum, the silicon-based core exhibits distinct peaks due to Raman scattering in the wavenumber range of 460 cm⁻¹ to 560 cm⁻¹. In this case, the silicon-based core may have a minimum Raman scattering intensity (I₀) close to the baseline at a wavenumber of 560 cm⁻¹. In addition, the silicon-based core has a maximum scattering intensity (I_{MAX}) in a wavenumber range of less than 560 cm⁻¹, 490 cm⁻¹ to 550 cm⁻¹, 490 cm⁻¹ to 530 cm⁻¹, or 500 cm⁻¹ to 525 cm⁻¹, and the wavenumber corresponding to I_{MAX} is WN(Si) in Equation 1.

The Raman spectra of the silicon-based cores are measured independently at 10 different locations. Among the 10 WN(Si) values calculated from each Raman spectrum, the maximum value corresponds to WN(Si)_{MAX} in Equation 1, and the minimum value corresponds to WN(Si)_{MIN} in Equation 1.

In one embodiment, the standard deviation of the average value of the WN(Si) values, excluding the maximum and minimum values, may be 3 cm⁻¹ or less, 2.5 cm⁻¹ or less, 2 cm⁻¹ or less, or 1.5 cm⁻¹ or less, and may be 0.1 to 3 cm⁻¹, 0.5 to 2.5 cm⁻¹, 0.7 to 2 cm⁻¹, or 0.9 to 1.5 cm⁻¹.

As described above, the silicon-based core exhibits a peak in the wavenumber range. The maximum scattering intensity (I_{MAX} - I₀) relative to the Raman scattering intensity at a wavenumber of 560 cm⁻¹, that is, the minimum scattering intensity (I₀), may represent the height of the peak. In this case, W_{AVE} in Equation 2 is the average of the widths at the 75% height of each of the 10 peaks. I₀ and I_{MAX} refer to the peak heights calculated from the baseline, and the average value in Equation 2 may refer to the average of the peak widths measured at the 10 random and different locations, excluding the maximum and minimum values.

In the Raman spectrum described above, the peak may appear as a single peak, but it may also appear as multiple peaks that are superimposed on one another (convoluted). When multiple peaks overlap, the peaks may be obtained through peak deconvolution, and the peak width may be calculated from the deconvolved peaks.

Thus, based on the Raman spectra measured at 10 different locations on the silicon-based core, the negative electrode material for a secondary battery that satisfies Equations 1 and 2 is much more organically combined between the silicon-based core and the carbon coating layer than conventional silicon-based negative electrode materials known in the art. Therefore, the negative electrode material is capable of effectively dissipating the stress caused by the volume change of silicon while maintaining excellent ionic conductivity. Such negative electrode materials for a secondary battery may offer overall improvements in capacity, capacity retention, and charge-discharge performance.

In one embodiment, in Equation 1, WN(Si)_{MAX} - WN(Si)_{MIN} may be 6.5 cm⁻¹ or less, 6 cm⁻¹ or less, 5.5 cm⁻¹ or less, 5 cm⁻¹ or less, 4.5 cm⁻¹ or less, or 0.1 cm⁻¹ or more, and may be 0.1 to 7 cm⁻¹, 0.5 to 6.5 cm⁻¹, 1 to 6 cm⁻¹, 1 to 5 cm⁻¹, or 2 to 4.5 cm⁻¹.

In this case, the standard deviation of WN(Si)_{MAX} - WN(Si)_{MIN} in Equation 1 may be 5 cm⁻¹ or less, 3 cm⁻¹ or less, 2 cm⁻¹ or less, 1.5 cm⁻¹ or less, or 0.1 cm⁻¹ or more, and may be 0.1 to 5 cm⁻¹, 0.1 to 3 cm⁻¹, 0.1 to 2 cm⁻¹, or 0.1 to 1.5 cm⁻¹.

The fact that the value of WN(Si)_{MAX} - WN(Si)_{MIN} in Equation 1 is small may indicate that the stress applied to the silicon nanocrystals contained in the negative electrode material is nearly constant and uniform. Furthermore, this may imply that the magnitude of residual stress in all silicon nanocrystals dispersed within the matrix comprising silicon oxide is substantially the same.

In one embodiment, W_{AVE} in Equation 2 may be 16.5 cm⁻¹ or less, 16 cm⁻¹ or less, 15.5 cm⁻¹ or less, or 1 cm⁻¹ or more, and may be 1 to 17 cm⁻¹, 5 to 16.5 cm⁻¹, 8 to 16 cm⁻¹, or 10 to 15.5 cm⁻¹.

In this case, the standard deviation of W_{AVE} in Equation 1 may be 5 cm⁻¹ or less, 4 cm⁻¹ or less, 3 cm⁻¹ or less, 2 cm⁻¹ or less, or 0.1 cm⁻¹ or more, and may be 0.1 to 5 cm⁻¹, 0.3 to 4 cm⁻¹, 0.5 to 3 cm⁻¹, or 0.7 to 2 cm⁻¹.

The silicon-based core may include silicon components in the form of elemental silicon and silicon components in the form of oxides, and the silicon components in the form of oxides may refer to oxides of silicon alone. Silicon oxide may satisfy the formula SiOₓ (where x is a real number greater than 0.1 and less than 2, specifically greater than 0.3 and less than 1.8), and may include a first silicon oxide and a second silicon oxide having different values of x.

In one embodiment, the silicon-based core may include a silicon oxide matrix and silicon nanocrystals dispersedly embedded in the silicon oxide matrix. However, the present disclosure does not preclude embodiments in which the silicon-based core contains only a matrix comprising silicon oxide and substantially no silicon nanocrystals.

In one embodiment, the silicon-based core may contain silicon nanocrystals in an amount of 1 to 70 wt%, 2 to 60 wt%, 5 to 50 wt%, or 10 to 50 wt% of the total weight of the silicon-based core, and may contain a silicon oxide matrix as the remainder.

The silicon oxide matrix may refer to a solid-state medium in which silicon nanocrystals are dispersed and embedded, or it may refer to a material that forms a continuum in the negative electrode material relative to the dispersed silicon nanocrystals. In this specification, the term "matrix" may refer to the material in the negative electrode material excluding the silicon (Si) nanocrystals.

For example, the silicon oxide contained in the silicon oxide matrix may satisfy the formula SiO_{y} (where y is a real number less than 2; specifically, a real number between 0.1 and 1.8; more specifically, a real number between 0.1 and 1.5).

A silicon oxide matrix may be crystalline, amorphous, or a composite phase consisting of both crystalline and amorphous phases. More specifically, the matrix may be crystalline or a composite phase consisting of both crystalline and amorphous phases. Furthermore, the silicon contained in the silicon oxide matrix may include valence silicon corresponding to one or more combinations selected from the group consisting of Si¹⁺, Si²⁺, Si^{3+,} and Si⁴⁺.

Silicon nanocrystals may have a size (diameter) that typically falls within the range defined as nanocrystals. The silicon nanocrystals may have a diameter of substantially 100 nm or less, 50 nm or less, 20 nm or less, or 15 nm or less, and may, for example, have a diameter of 1 to 20 nm, 1 to 15 nm, or 1 to 10 nm. The size of the silicon nanocrystals may be calculated by substituting the FWHM of the Si (220) crystal plane, as measured by X-ray diffraction, into the Scherrer equation.

The carbon coating layer refers to a carbon film coated onto the surface of the silicon-based core; this layer may protect the silicon-based core and suppress volume changes in the silicon of the silicon-based core, and despite having nearly amorphous properties, it may provide excellent conductivity and electrochemical characteristics.

As an example, the carbon coating layer may be an amorphous carbon layer. The amorphous carbon layer may stably wrap the surface of the core and prevent volume changes in the silicon.

In one embodiment, the carbon coating layer may be contained in an amount of 0.5 to 8 wt%, specifically 0.5 to 6 wt%, based on the total weight of the negative electrode material.

Although the thickness of the carbon coating layer is not specifically limited, the average thickness of the carbon coating layer may be 1 to 200 nm, 1 to 150 nm, 1 to 100 nm, 2 to 50 nm, 3 to 30 nm, or 5 to 15 nm. For experimental purposes, the thickness of the carbon coating layer may be determined by measuring the thickness at more than 10 random locations-typically between 10 and 20 locations-using images obtained via transmission electron microscopy (TEM), scanning transmission electron microscopy (STEM), or the like, and then calculating the average value. Within this range, it is possible to reliably wrap the surface of the core while minimizing the electrical resistance component.

In one embodiment, the carbon coating layer may comprise a plurality of carbon nanoparticles. The carbon nanoparticles may be located, at least in part, in one or more regions selected from the interior and the surface of the carbon coating layer.

Specifically, the carbon coating layer may comprise a dispersed phase and a continuous phase. Within the carbon coating layer, a plurality of carbon nanoparticles form a dispersed phase, and by physically binding this dispersed phase, a continuous phase consisting of carbon may be formed. Although the dispersed phase and the continuous phase are both composed of carbon, they may be distinguished as different phases within the carbon coating layer. For example, when observed using a scanning electron microscope (SEM), the dispersed phase may be identified in images obtained from fracture surface analysis of the negative electrode material.

The carbon nanoparticles may be primary carbon particles or secondary carbon particles formed by aggregation of the primary carbon particles; and in the carbon coating layer, the primary carbon particles and the secondary carbon particles may exist either separately or as a mixture.

Specifically, the carbon nanoparticles may be embedded within the carbon coating layer to be in contact with the silicon-based core; they may be in contact with the silicon-based core with a portion thereof protruding from a surface of the carbon coating layer; they may be partially embedded within the carbon coating layer with a remaining portion thereof protruding from the surface of the carbon coating layer; or they may be bonded to the surface of the carbon coating layer.

Thus, the carbon coating layer comprising the carbon nanoparticles may improve electrical conductivity of an exposed surface thereof and suppress side reactions with an electrolyte. In addition, resistance between particles of the negative electrode material (contact resistance) may be reduced, and stable and smooth electrical contact between the particles of the negative electrode material may be maintained.

The carbon nanoparticles may be spherical or ellipsoidal, though they are not limited to a specific shape; and specifically, they may have a spherical bead shape. An average particle size of the carbon nanoparticles is not specifically limited, but may be 2 nm to 1 µm, specifically 5 to 0.5 µm, and more specifically 5 to 200 nm. Such carbon nanoparticles are relatively coarse compared to a thickness of the carbon coating layer, thereby enabling them to maintain stable contact between the negative electrode materials even when the negative electrode material undergoes volume changes due to silicon. In this case, a proportion of an area of the particulate negative electrode material occupied by the carbon nanoparticles may be 30% or more, specifically 50% or more, and more specifically 70% or more and less than 100%. Experimentally, the proportion of the area occupied by the carbon nanoparticles is obtained by using images obtained via transmission electron microscopy (TEM) or scanning electron microscopy (SEM), assuming a surface formed by the silicon-based core being completely enveloped by a hypothetical film having the same thickness as the carbon coating layer but without the carbon nanoparticles, calculating a total area, and then measuring the area occupied by the carbon nanoparticles on the hypothetical film.

Preferably, the carbon coating layer may be derived from a liquid carbon precursor. The liquid carbon precursor may refer to a carbon precursor that is in a liquid state at room temperature, such as 25°C, and may be a polycyclic aromatic compound having an average molecular weight of 100 to 2,000 Da, specifically 100 to 1,000 Da as measured by MALDI-TOF.

The carbon precursor may be a compound having a polycyclic aromatic structure containing three or more aromatic rings. Specifically, it may be a polycyclic aromatic structure consisting of 3 to 10 aromatic rings, but is not limited thereto.

In one non-limiting example, the liquid carbon precursor may be coal tar, petroleum-based residue, or the like; more specifically, the liquid carbon precursor may be liquid coal tar.

The term "liquid coal tar" as used above may refer to coal tar that is liquid by nature at room temperature (25±5 °C) and standard atmospheric pressure (1 atm), without the aid of chemicals such as solvents or the application of external energy such as heat.

Specifically, the liquid coal tar may have a specific gravity of 1.1 to 1.3 g/cc, specifically 1.13 to 1.28 g/cc, and more specifically 1.2 to 1.26 g/cc.

Furthermore, the liquid coal tar may have an initial boiling point (IBP) of 50 to 70 °C, 55 to 70 °C, 60 to 70 °C, or 65 to 70 °C. In this case, the IBP may have been measured in accordance with ASTM D86.

The liquid coal tar is advantageous not only because it may be uniformly coated onto the surface of the core particles, but also because it may easily penetrate the internal pores of the core particles.

In one embodiment, in a Raman spectrum of the negative electrode material, an intensity ratio (I_{D}/I_{G}) of a D-band peak to a G-band peak is 1.3 or less, and the intensity ratio (I_{D}/I_{G}) may be less than a FWHM ratio (F_{D}/F_{G}) of the D-band peak to the G-band peak.

Specifically, in the Raman spectrum of the negative electrode material, the D-band peak intensity (I_{D}) is the maximum intensity of the peak located in the wavenumber range of 1310 to 1380 cm⁻¹, and the G-band peak intensity (I_{G}) refers to the maximum intensity of the peak located in the wavenumber range of 1560 to 1630 cm⁻¹ in the same Raman spectroscopic analysis. Although not limited thereto, for experimental purposes, the Raman spectra may have been measured using a Raman spectrometer (WITec GmbH) at room temperature and under ambient conditions with a laser having a wavelength of 532 nm.

The FWHM is the width of the spectrum measured at half the height of each spectral peak (D band and G band) measured from the baseline of the Raman spectrum by peak deconvolution of the D band and G band.

In one embodiment, the I_{D}/I_{G} ratio in the Raman spectrum may be smaller than the F_{D}/F_{G} ratio. Specifically, the I_{D}/I_{G} ratio may be less than 1.3, 1.25 or less, 1.2 or less, 1.15 or less, or 1.13 or less, and may, without limitation, be 0.5 or greater. Specifically, it may be 0.5 or more and less than 1.3, 0.5 to 1.25, 0.6 to 1.2, or 0.7 to 1.15. Furthermore, the F_{D}/F_{G} ratio may be 1.3 or greater, 1.4 or greater, 1.5 or greater, or 1.7 or greater, and may, without limitation, be 2.5 or less. Specifically, it may be 1.3 to 2.5, 1.4 to 2.5, 1.5 to 2.5, 1.6 to 2.3, or 1.7 to 2.1.

In one embodiment, the negative electrode material may simultaneously satisfy a mode in which the I_{D}/I_{G} ratio in the Raman spectrum is 0.5 to 1.25 and the F_{D}/F_{G} ratio is 1.3 to 2.5, a mode in which the I_{D}/I_{G} ratio is 0.6 to 1.2 and the F_{D}/F_{G} ratio is 1.5 to 2.1, or a mode in which the I_{D}/I_{G} ratio is 0.7 to 1.15 and the F_{D}/F_{G} ratio is 1.7 to 2.1.

In one embodiment, the FWHM of the G-band peak (F_{G}) may be 60 cm⁻¹ or more, 80 cm⁻¹ or more, 90 cm⁻¹ or more, 95 cm⁻¹ or more, or 100 cm⁻¹ or more, and may non-limitingly be 130 cm⁻¹ or less. More specifically, these values may be 60 to 130 cm⁻¹, 80 to 120 cm⁻¹, or 95 to 110 cm⁻¹.

In one embodiment, a specific surface area of the negative electrode material according to the present disclosure may be 10 m²/g or less, specifically 5 m²/g or less, and more specifically 0.5 to 5 m²/g. Accordingly, the negative electrode material for a secondary battery according to the present disclosure may suppress irreversible side reactions and exhibit improved electrical properties by reducing the adsorption of the electrode binder.

In one embodiment, the negative electrode material for a secondary battery according to the present disclosure may satisfy Equation 3 below.$1 > WN {\left(Si\right)}_{AVE} / WN \left(ref\right)$

In Equation 3, WN(Si)_{AVE} is an average value of WN(Si), and WN(ref) is a wavenumber corresponding to a maximum scattering intensity in a Raman spectrum, which is located in a wavenumber range of 460 cm⁻¹ to 560 cm⁻¹, of bulk single-crystal silicon.

In Equation 3, WN(Si)_{AVE}/WN(ref) is a parameter that indicates the type and magnitude of the residual stress remaining in the silicon nanoparticulates dispersedly embedded in the matrix.

In Equation 3, the term "bulk single-crystal silicon" should be interpreted to mean silicon of a size at which the physical properties of bulk single-crystal silicon are effectively manifested. For the purposes of establishing clear comparison criteria and ensuring ease of purchase, "bulk single-crystal silicon" may refer to single-crystal silicon wafers having a thickness in the sub-millimeter order. For example, the single-crystal silicon wafer described above may have a thickness of 0.4 to 0.7 mm.

The fact that WN(Si)_{AVE}/WN(ref) is less than 1 in Equation 3 indicates that, compared to bulk single-crystal silicon, the central wavenumber of the Raman peak of the silicon nanocrystals contained in the negative electrode material shifts toward lower wavenumbers, and means that the silicon nanocrystals possess residual tensile stress.

In Equation 3, the Raman peak of bulk single-crystal silicon refers to a peak located in a range of 460 cm⁻¹ to 560 cm⁻¹, a range of 480 to 530 cm⁻¹, a range of 500 to 525 cm⁻¹, or a range of 510 to 520 cm⁻¹. in the Raman spectrum of the silicon-based core. The central wavenumber of the peak may correspond to the wavenumber at which the scattering intensity is greatest. In this case, if there are two or more Raman peaks in the Raman shift region, the peak with the highest intensity may correspond to the peak in Equation 3. If two or more Raman peaks overlap to form a doublet, the wavenumber having the maximum intensity value in the higher-intensity peak of the doublet may correspond to the central wavenumber of the peak.

A full width at half maximum (FWHM) of a Raman peak of the silicon nanocrystals contained in the negative electrode material may be larger than an FWHM of the Raman peak of bulk single-crystal silicon. The wider FWHM value compared to the bulk single-crystal silicon described above may be attributed to a structure in which silicon contained in the negative electrode material is dispersedly embedded in the matrix in a form of ultrafine nanocrystallites.

Specifically, the FWHM of the Raman peak of the silicon nanocrystals included in the negative electrode material may be 4 to 25 cm⁻¹, 5 to 22 cm⁻¹, 6 to 20 cm⁻¹, 6 to 18 cm⁻¹, or 8 to 15 cm⁻¹. In this case, the Raman peak of the silicon nanocrystals contained in the negative electrode material may refer to a single peak rather than a deconvoluted peak.

As described above, the silicon-based core refers to silicon oxide represented by SiOₓ (where x is a real number greater than 0.1 and less than 2, specifically greater than 0.3 and less than 1.8), and may not be doped with a metal. Generally, it is well known that silicon oxide-based negative electrode materials are doped with metals such as lithium or magnesium to suppress the formation of lithium oxides, which cause initial irreversibility during the charge/discharge of secondary batteries. The metal-doped silicon oxide-based negative electrode material improves initial coulombic efficiency by converting lithium oxide, which does not participate in electrochemical reactions, into an irreversible phase. Furthermore, this technique not only improves cycle characteristics by reducing the size of the silicon nanocrystals but also ensures that the silicon nanocrystals exhibit generally uniform characteristics as the matrix transitions to a metal-silicon oxide phase. For example, the size, crystalline structure, and stress characteristics of the silicon nanocrystals may be significantly improved and made more uniform in a metal-doped silicon oxide matrix compared to a silicon oxide matrix.

In contrast, the negative electrode material for a secondary battery according to the present disclosure offers technical advantages in that the size of the silicon nanocrystals may be controlled to be extremely small despite the absence of metal doping, and the crystal and stress characteristics may be maintained at a level equivalent to that of a metal-doped silicon oxide matrix. As mentioned above, the FWHM of the Raman peak of the silicon nanocrystals contained in the negative electrode material is low, indicating that the size of these silicon nanocrystals may be precisely controlled to be very small. At the same time, the stress applied to the silicon nanocrystals may also be uniformly controlled.

Furthermore, the fact that the negative electrode material satisfies Equations 1 to 3 implies that most of the silicon nanocrystals dispersed in the silicon oxide matrix possess residual tensile stress. Furthermore, this implies that the magnitude of the tensile stress remaining in most of the silicon nanocrystals dispersed within the silicon oxide matrix is substantially the same. For example, a ratio of residual tensile stress measured in silicon nanocrystals located at different positions may be 80% or more, 90% or more, or 95% or more; and it may also be 90% to 100%, 95% to 100%, or 98% to 100%.

Such a negative electrode material for a secondary battery exhibits uniform electrochemical properties at any location within a single negative electrode material particle. Furthermore, since the negative electrode material for a secondary battery as described above exhibits uniform electrochemical properties even among different negative electrode material particles, it may demonstrate excellent rate performance. More specifically, the negative electrode material for a secondary battery according to the present disclosure may have an average capacity retention of 90% or more, 91% or more, 93% or more, specifically 95% or more, and more specifically 98% or more, within 3 to 25 charge/discharge cycles.

Furthermore, the initial coulombic efficiency of the negative electrode material according to the present disclosure may be 70% or more, 73% or more, or 74% or more. The initial discharge capacity of the negative electrode material may be 1,300 mAh/g or more, 1,400 mAh/g or more, 1,500 mAh/g or more, 1,600 mAh/g or more, or 1,700 mAh/g or more.

The negative electrode material for a secondary battery according to the present disclosure is provided in a particulate form. Specifically, the negative electrode material may comprise one or more particles selected from primary particles and secondary particles. In other words, the negative electrode material may comprise primary particles, secondary particles, or a mixture of primary and secondary particles. The primary particles may be defined as individual particles, and the secondary particles may be defined as aggregates formed by two or more particles.

There is no specific limit on the median particle size (D₅₀) of the negative electrode material. The average particle size may be defined as the volume- based median particle size (D₅₀) calculated using the laser diffraction method. The volume-based D₅₀ refers to the particle size at which the cumulative volume percentage reaches 50% on a cumulative particle size distribution curve. Experimentally, the cumulative distribution curve, including the D₅₀, may be obtained using a conventional particle size analyzer that employs laser diffraction or dynamic light scattering.

The D₅₀ value of the negative electrode material may be 1 µm to 20 µm, 2 µm to 18 µm, 3 µm to 15 µm, or 5 µm to 15 µm.

In this case, the D₁ particle size of the negative electrode material may be 0.5 to 5 µm, 1.5 to 4.5 µm, or 2 to 4 µm, and the D₁₀/D₁ ratio may be 1 to 3, 1 to 2.5, or 1 to 2.3.

Since the D₁ particle size and the D₁₀/D₁ ratio satisfy the above conditions, the initial coulombic efficiency of the battery may be improved and its power characteristics enhanced by increasing the mixture density of the electrode without causing excessive side reactions with the electrolyte.

In addition, the D₉₀ particle size of the negative electrode material may be 8.5 to 25 µm or 9 to 21 µm, and the D₉₉/D₉₀ ratio may be 1 to 3.5, 1.1 to 3, or 1.2 to 2.1.

Since the D₉₀ particle size and the D₉₉/D₉₀ ratios satisfy the above conditions, an appropriate balance is achieved between the mixture density of the electrode and the expansion of the electrode, thereby improving the battery's power characteristics and capacity retention.

Similar to the definition of the median particle size (D₅₀) of the negative electrode material, D₁, D₁₀, D₉₀, and D₉₉ are defined as the particle sizes at the points on the cumulative volume distribution curve where the cumulative volume percentages are 1%, 10%, 90%, and 99%, respectively.

As described above, the negative electrode material comprises particles with a relatively uniform particle size distribution. This ensures stable conductivity during the formation of the negative electrode mixture layer while reducing the diffusion time of metal ions involved in charging and discharging-such as the lithium ions-thereby enabling improved and more stable charging and discharging cycle characteristics.

The negative electrode material for a secondary battery according to the present disclosure may be obtained through S1) a step of manufacturing a silicon-based core and S2) a step of forming a carbon coating layer.

S1) The step of manufacturing a silicon-based core is not specifically limited to any particular method for producing the silicon-based core used as an active material; it may involve the use of commercial silicon oxide, SiOₓ (where x is a real number greater than 0.1 and less than 2, specifically a real number greater than 0.3 and less than 1.8), or it may involve vaporizing Si and SiO2 to produce the silicon-based core.

To give a specific example, step S1) comprises: a) mixing metallic silicon powder (Si) and silicon dioxide (SiO2) to obtain a mixed raw material; b) molding the mixed raw material to form pellets; c) heating and vaporizing the pellets under vacuum conditions to obtain gaseous silicon oxide; and d) condensing the gaseous silicon oxide onto a heated collection plate to obtain a silicon-based core composed of silicon oxide (SiOₓ).

In step a), mixing may be performed such that a mixing molar ratio of Si : SiO2 is 1 : 0.1 to 7, 1 : 0.5 to 5, 1 : 0.5 to 3, 1 : 0.7 to 2, or 1 : 0.9 to 1.5. The mixing process may involve homogenizing the Si and SiO2 after they have been fed into a powder mixer.

Step b) above involves pelletizing the mixed raw material; for example, this may be performed by molding the mixed raw material into a pellet mold. Step c) above involves vaporizing the pellets; the temperature during heating and vaporization may be 1,000 to 1,700°C, specifically 1,200 to 1,600°C, and more specifically 1,300 to 1,500°C, and the process may be carried out under reduced pressure. Step d) above involves condensing gaseous silicon oxide to obtain particulate silicon oxide, and may be carried out by maintaining the temperature of the collection plate at 300 to 1,200°C, specifically 400 to 1,000°C.

In one embodiment, step S1) may further include grinding the silicon-based core obtained after step d). The grinding process may be performed using a grinding device such as a jet mill, and the ground silicon-based core may be recovered via a cyclone after grinding at high speeds. By appropriately controlling the median particle size (D₅₀) and distribution of the silicon-based core through grinding, it is possible to easily control the median particle size (D₅₀) and distribution of the negative electrode material.

Step S2) involves forming a carbon coating layer on the silicon-based core, which is a silicon oxide produced in step S1).

Step S2) comprises: f) mixing a liquid carbon precursor with the silicon oxide obtained in step S1) to obtain a mixture; and g) carbonizing the mixture.

The mixing ratio of the silicon oxide and the liquid carbon precursor in step f) is not specifically limited. For example, a mixing ratio of the silicon oxide to the carbon precursor may be 20:1 to 0.5:1, specifically 15:1 to 1:1 by weight. The liquid carbon precursor introduced may advantageously be a sulfur-containing carbon precursor and, as described above, may be coal tar or petroleum-based residue that is liquid at room temperature. In step f), the mixing time may be appropriately adjusted in proportion to an amount of the mixture being mixed, and mixing may be performed at a linear velocity of 0.5 to 40 m/s, specifically 0.8 to 30 m/s, but is not limited thereto.

Step g) is a step of carbonizing the mixture; and the method is not specifically limited as long as it is capable of forming a carbon coating layer on the silicon oxide by carbonizing the carbon precursor. Specifically, the carbonization may be carried out at a temperature of 700 to 1,500°C, specifically 800 to 1,200°C, for 0.5 to 3 hours, specifically 0.6 to 2 hours.

The carbonization in step g) may be carried out in multiple stages. Specifically, the carbonization may be carried out in n (where n is a natural number greater than 1) carbonization steps. In one non-limiting embodiment, when n is 3, the carbonization process may comprise the following steps: heating to reach a first temperature condition, followed by first carbonization under the first temperature condition; heating to reach a second temperature condition, followed by second carbonization under the second temperature condition; and heating to reach a third temperature condition, followed by third carbonization under the third temperature condition. The first to third temperatures may all have different values, or two of them may have the same value, but all three cannot have the same value. The negative electrode material produced in step g) may be allowed to cool naturally to room temperature (20±5°C).

In one embodiment, the process may further comprise a step of disintegrating the negative electrode material obtained after step g).

This disintegration may be performed using various mechanical methods; and by applying mechanical shear forces within a device such as a pin mill, the thickness and properties of the carbon coating layer may be uniformly controlled, while simultaneously facilitating the adjustment of the median particle size (D₅₀) and distribution of the negative electrode material. The above disintegration step may not be necessary if the content of carbon precursors is low relative to silicon oxide. However, when the content of the carbon precursor relative to the silicon oxide is high, performing an additional disintegration step may improve cycle characteristics and capacity retention, making it a desirable approach.

The present disclosure provides a negative electrode comprising the negative electrode material. The negative electrode may be a negative electrode for a secondary battery, specifically a negative electrode for a lithium secondary battery. The negative electrode may comprise a negative electrode current collector; and a negative electrode mixture layer disposed on at least one surface of the negative electrode current collector and comprising the negative electrode material.

In one embodiment, the negative electrode mixture layer may further comprise a carbon-based negative electrode active material. The carbon-based negative electrode active material may be one or more selected from the group consisting of synthetic graphite, natural graphite, and hard carbon; however, the present disclosure is not limited thereto.

As an example, a weight ratio of the negative electrode material according to the embodiment contained in the negative electrode mixture layer to the carbon-based negative electrode active material may be 1:99 to 99:1, specifically 5:95 to 95:5, more specifically 5:95 to 50:50, and even more specifically 5:95 to 20:80.

The negative electrode for a secondary battery described above may be manufactured by coating and drying a slurry comprising the negative electrode material according to the embodiments described above, a binder, a conductive material, and a solvent onto a negative electrode current collector. Methods for manufacturing negative electrodes are well known in this technical field, and any of the disclosed methods for manufacturing negative electrodes may be used without limitation.

Examples of the conductive material include, but are not limited to, carbon-based conductive materials such as carbon black, ultrafine graphite particles, acetylene black, graphene, carbon nanotubes, or carbon nanofibers.

The binder may comprise one or a combination of two or more selected from the group consisting of styrene-butadiene rubber (SBR), fluorinated rubber, ethylene-propylene rubber, butyl acrylate rubber, butadiene rubber, isoprene rubber, acrylonitrile rubber, acrylic rubber, silane rubber, polyacrylic acid (PAA), a copolymer containing an acrylic acid structural unit, polyvinyl alcohol (PVA), and a copolymer containing a vinyl alcohol structural unit. Specifically, the binder may be polyacrylic acid (PAA) or a copolymer containing an acrylic acid structural unit.

The present disclosure provides a secondary battery comprising the negative electrode described above.

The secondary battery according to an embodiment of the present disclosure may be a lithium secondary battery, and said lithium secondary battery may include a positive electrode, a negative electrode, a separator interposed between the positive electrode and the negative electrode, and an electrolyte.

The positive electrode may include a positive electrode current collector and a positive electrode composite layer located on at least one surface of the positive electrode current collector.

The positive electrode composite layer comprises a positive electrode material as its main component and may include a lithium compound containing one or more metals selected from the group consisting of, for example, Ni, Co, Mn, Al, Cr, Fe, Mg, Sr, V, La, and Ce, and one or more non-metallic elements selected from the group consisting of O, F, S, and P. The positive electrode composite layer may contain positive electrode material particles ranging in size from 0.01 µm to 200 µm, which may be selected appropriately based on the required characteristics of the battery.

The positive electrode may be manufactured by coating and drying a slurry comprising a positive electrode material, a binder, a conductive agent, and a solvent, as described in the embodiments, onto the positive electrode current collector. Methods for manufacturing electrodes are well known in this technical field, and any of the disclosed methods may be used without limitation.

Examples of such conductive materials include, but are not limited to, carbon-based conductive materials such as carbon black, ultrafine graphite particles, acetylene black, graphene, carbon nanotubes, or carbon nanofibers, as well as pastes containing nano-metal particles.

The positive electrode current collector serves to support the positive electrode composite layer. As a positive electrode current collector, aluminum foil, nickel foil, or a combination thereof may be used, but this is not limited to these examples.

Any separator that separates the positive electrode and negative electrode and provides a pathway for lithium-ion migration-provided it is commonly used in lithium secondary batteries-may be used. In other words, a material that exhibits high lithium mobility with respect to ion migration in the electrolyte and excellent electrolyte retention capacity may be used. The separator may be selected from, for example, glass fiber, polyester, polyethylene, polypropylene, polytetrafluoroethylene, or a combination thereof, and may be in the form of a nonwoven fabric or a microporous membrane. Meanwhile, when a solid electrolyte is used as the electrolyte, a conventional separator is not included, and the solid electrolyte may serve as both the electrolyte and the separator.

A lithium secondary battery may first be assembled into an electrode assembly comprising a positive electrode, a negative electrode, and a separator positioned between the positive electrode and the negative electrode. The electrode assembly is wound or folded and housed in the battery container. The battery container may be cylindrical, rectangular, pouch-type, coin-type, or other shapes. Once the electrolyte is filled into the battery container and the battery container is sealed, the lithium secondary battery may be completed.

The electrolyte introduced into the lithium secondary battery is an electrolyte that conducts active ions-such as lithium ions-involved in the charging and discharging of the battery; options include non-aqueous electrolytes or solid electrolytes.

The non-aqueous electrolyte may contain lithium salts and organic solvents. For example, the lithium salt may be one in which the anion is any one selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

Any organic solvents commonly used in electrolytes for a lithium secondary battery may be used without restriction; and for example, any one or a combination of two or more selected from the group consisting of propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, dimethoxyethane, diethoxyethane, vinylene carbonate, sulfolane, gamma-butyrolactone, propylene sulfite, and tetrahydrofuran may be used.

The electrolyte may be a solid electrolyte, and examples thereof include a gel-type polymer electrolyte in which an electrolyte solution is impregnated into a polymer electrolyte such as polyethylene oxide or polyacrylonitrile, or an inorganic solid electrolyte such as LiI or Li₃N.

Meanwhile, the secondary battery according to one embodiment may be a half-cell.

The half-cell may be a cell provided with: a negative electrode disposed on at least one surface of a negative electrode current collector and comprising the negative electrode material according to the embodiment; a counter electrode consisting of a lithium metal foil; a separator interposed between the negative electrode and the counter electrode; and an electrolyte. For example, the electrolyte may be prepared by dissolving LiPF₆ at a concentration of 1 M in a mixed solvent in which ethylene carbonate and ethyl methyl carbonate are mixed at a volume ratio of 1:1.

The negative electrode material according to the present disclosure is not limited to lithium secondary batteries; and it may also be used as an active material in secondary batteries such as sodium batteries, aluminum batteries, magnesium batteries, calcium batteries, and zinc batteries.

Furthermore, the present disclosure provides a power supply comprising a secondary battery that comprises a negative electrode material according to an embodiment. Examples of the power supply include battery modules, battery packs, and energy storage systems (ESS), but are not limited thereto.

Hereinafter, the present disclosure will be described in detail with reference to examples. However, the examples described below are intended merely to illustrate the present disclosure and are not intended to limit the scope of the present disclosure. This is because the scope of the present disclosure is defined by the matters set forth in the claims and matters reasonably inferred therefrom.

### Example 1

### 1) Preparation of silicon oxide (SiOₓ)

Powdered Si and SiO₂ were fed into a powder mixer in a 1:1 molar ratio, mixed thoroughly to produce a raw mixture, and then molded into pellets using a mold.

26 kg of the pellets were placed in a crucible inside a vacuum chamber maintained at 0.1 torr or less, heated to 1,400°C to be vaporized, and then condensed onto a collection plate maintained at 800°C (±25°C) to obtain solid silicon oxide (SiOₓ). The obtained solid silicon oxide was first coarsely ground in a mill, and then finely ground in an air jet mill to produce a fine powder of silicon oxide (SiOₓ) having a median particle size (D₅₀) of 5.6 µm.

### 2) Formation of a carbon coating layer

As a liquid carbon precursor, coal tar, which is liquid at room temperature and produced during coking of raw coal in steel mills, was used (specific gravity = 1.1 to 1.3 g/cc; and a carbon yield is approximately 25% when carbonized at 900°C).

The fine powder of silicon oxide obtained in step 1) was introduced into a planetary mixer maintained at 37°C (±3°C); and the coal tar was introduced at a weight ratio of 10:1 and mixed at a linear velocity of 0.6 m/s for 1 hour to obtain a mixture. Next, 5 kg of the mixture was loaded into a graphite crucible, heated to 900°C under a nitrogen atmosphere, and held at 900°C for 120 minutes. The temperature inside the crucible was then raised again to reach 930°C, and then maintained at 930°C for 30 minutes. The interior of the crucible was then allowed to cool naturally to 900°C, and then the temperature was maintained at 900°C for 30 minutes. The negative electrode material was then allowed to cool naturally to room temperature (20±5°C) to obtain a particulate form. A specific surface area (SSA) of the negative electrode material was measured by a BET method based on nitrogen gas adsorption using a specific surface area analyzer (Micromeritics, ASAP 2020 PLUS), and an average particle size was measured using a laser diffraction particle size analyzer (Microtrac S3500). The results are shown in Table 1 below.

### Example 2

A negative electrode material was prepared in the same manner as in Example 1, except that a target temperature of the graphite crucible was changed during the formation of the carbon coating layer in step 2). Specifically, after the mixture was loaded into the graphite crucible and the temperature reached 950°C, it was held at 950°C for 120 minutes. Subsequently, the crucible was heated again to reach 980°C, and then held at 980°C for 30 minutes. Finally, the crucible was allowed to cool naturally to 950°C and held at 950°C for 30 minutes.

### Example 3

A negative electrode material was prepared in the same manner as in Example 1, except that the target temperature of the graphite crucible was changed during the formation of the carbon coating layer in step 2). Specifically, after heating the graphite crucible containing the mixture to 1,000°C, the temperature was maintained at 1,000°C for 120 minutes; the interior of the crucible was then heated again to reach 1,030°C, and then maintained at 1,030°C for 30 minutes; and finally, the interior of the crucible was allowed to cool naturally to 1,000°C, and then the temperature was maintained at 1,000°C for 30 minutes.

### Example 4

A negative electrode material was prepared in the same manner as in Example 1, except that when the fine powder-form silicon oxide obtained in 1) and coal tar were introduced into a mixer, a weight ratio of the introduced silicon oxide to the coal tar was 5 : 1.

### Example 5

The negative electrode material was prepared in the same manner as in Example 4, except that the manufactured particulate negative electrode material was fed into a supply, classification, and milling machine (ACM) and disintegrated to a median particle size (D₅₀) of 5.8 µm.

### Example 6

In the above Example 1, during the formation of the carbon coating layer in step 2), after the graphite crucible containing the mixture reached 950°C, the temperature was maintained at 950°C for 40 minutes; subsequently, the temperature inside the crucible was raised again to reach 980°C, and maintained at 980°C for 10 minutes; and finally, the interior of the crucible was allowed to cool naturally to 950°C and maintained at 950°C for 10 minutes. Except for these modifications, the negative electrode material was manufactured in the same manner as in Example 1.

### Example 7

In Example 1, the negative electrode material was prepared in the same manner as in Example 1, except that the target temperature of the graphite crucible was kept constant during the formation of the carbon coating layer in step 2. Specifically, the graphite crucible containing the mixture was heated to 900°C and held at that temperature for 1 hour.

### Comparative Example 1

In the above Example 1, the negative electrode material was prepared in the same manner as in Example 1, except that in step 2), 50 g of silicon oxide (SiOₓ) powder was loaded into a thermal CVD apparatus maintained at 900°C, and methane and argon were continuously supplied into the apparatus at a flow rate of 1 L/min each, and carbon deposition was performed for 1 hour.

### Comparative Example 2

In the above Example 1, the negative electrode material was prepared in the same manner as in Example 1, except that in step 2), 50 g of silicon oxide (SiOₓ) powder was loaded into a thermal CVD apparatus maintained at 950°C, and methane and argon were continuously supplied into the apparatus at a flow rate of 1 L/min each, and carbon deposition was performed for 1 hour.

### Comparative Example 2

In Comparative Example 1 described above, the negative electrode material was prepared in the same manner as in Example 1, except that carbon deposition was performed for 3 hours.

**[Table 1]**

| **Sample** | **Carbonization Method** | **Collection plate temperature (°C)** | **Carbonization Temperature by Step (°C)** | | | **Carboniz ation Time (h)** | **Carbon Content (wt%)** | **SSA (m²/g)** | **PSD (Particle Size Distribution, µm)** | | | | |
|---|---|---|---|---|---|---|---|---|---|---|---|---|---|
| | | | **1st** | **2nd** | **3rd** | | | | **D₁** | **D₁₀** | **D₅₀** | **D₉₀** | **D₉₉** |
| **Example 1** | CT, Multi-stage | 800 | 900 | 930 | 900 | 3 | 2.5 | 1.3 | 1.9 | 2.8 | 5.9 | 9.8 | 13.1 |
| **Example 2** | CT, Multi-stage | 800 | 950 | 980 | 950 | 3 | 2.4 | 1.4 | 2.1 | 3.0 | 6.2 | 11.1 | 15.9 |
| **Example 3** | CT, Multi-stage | 800 | 1000 | 1030 | 1000 | 3 | 2.2 | 1.4 | 2.1 | 3.2 | 6.4 | 12.9 | 27.0 |
| **Example 4** | CT, Multi-stage | 800 | 950 | 980 | 950 | 3 | 4.8 | 1.7 | 3.5 | 4.7 | 10.2 | 19.2 | 33.5 |
| **Example 5** | CT, Multi-stage, Disintegrating | 800 | 950 | 980 | 950 | 3 | 4.7 | 2.8 | 2.1 | 3.3 | 5.8 | 9.6 | 12.0 |
| **Example 6** | CT, Multi-stage | 800 | 950 | 980 | 950 | 1 | 2.6 | 2.2 | 1.5 | 2.8 | 5.7 | 8.7 | 13.8 |
| **Example 7** | CT | 800 | 900 | | | 3 | 2.1 | 3.3 | 2.1 | 3.3 | 5.8 | 9.6 | 12.0 |
| **Comparative Example 1** | CVD | 800 | 900 | | | 1 | 3.7 | 2.3 | 2.7 | 3.9 | 6.5 | 10.6 | 14.0 |
| **Comparative Example 2** | CVD | 800 | 900 | | | 1 | 2.6 | 3.5 | 1.9 | 2.8 | 5.7 | 10.2 | 13.8 |
| **Comparative Example 3** | CVD | 800 | 900 | | | 3 | 3.5 | 4.3 | 2.1 | 3.9 | 6.6 | 11.4 | 15.6 |
| • CT: Carbon coating layer formation through Coal Tar | | | | | | | | | | | | | |
| • CVD: Carbon coating layer formation through Chemical Vapor Deposition (CVD) | | | | | | | | | | | | | |
| • Multi-stage: Carburization involving two or more heat treatment stages | | | | | | | | | | | | | |
| • Disintegrating: Disintegrating using an Air Classifier Mill (ACM) | | | | | | | | | | | | | |

It was confirmed that the negative electrode materials of the present disclosure generally have a smaller specific surface area than those of the comparative examples; in particular, the negative electrode materials of Examples 1 through 4 were found to have a specific surface area of less than 2 m²/g.

### [Measurement of negative electrode material Properties]

### 1. Raman spectroscopy

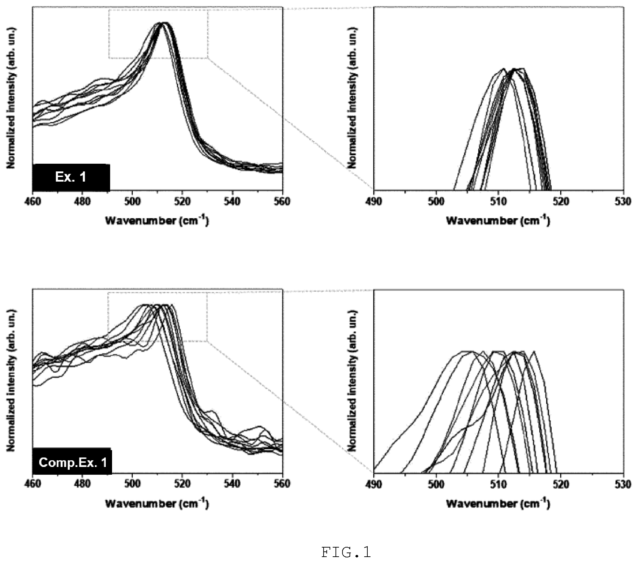

Raman spectra of the silicon-based cores were measured at 10 random and different locations of the negative electrode materials according to the Examples and Comparative Examples using µ-Raman (equipment name: XperRam C, Nanobase, Korea) under the following analysis conditions, and the results are shown in FIG. 1.

Based on the Raman spectra, WN(Si)_{MAX} - WN(Si)_{MIN}, the standard deviation of WN(Si) with respect to the average of WN(Si) (WN(Si)_{AVE}) (excluding WN(Si)_{MAX} and WN(Si)_{MIN}), W_{AVE}, and the standard deviation of W_{AVE} were calculated according to the following Relational Expression 1 and are listed in Table 2 below.$WN {\left(Si\right)}_{MAX - MIN} = WN {\left(Si\right)}_{MAX} - WN {\left(Si\right)}_{MIN}$

In Relational Expression 1, WN(Si) is a wavenumber corresponding to a maximum scattering intensity in the Raman spectrum of the silicon-based core, which is located in a wavenumber range of 460 cm⁻¹ to 560 cm⁻¹, and WN(Si)MAX and WN(Si)MIN are the maximum and minimum values of WN(Si) calculated from the Raman spectra measured at 10 different positions, respectively.

W_{AVE} is the average value of the widths of the Raman spectra corresponding to 75% of the maximum scattering intensity value based on the Raman scattering intensity at a wavenumber of 560 cm⁻¹, for each of the Raman spectra measured at the 10 different locations. In this case, the W_{AVE} average is the average of all values except the maximum and minimum.

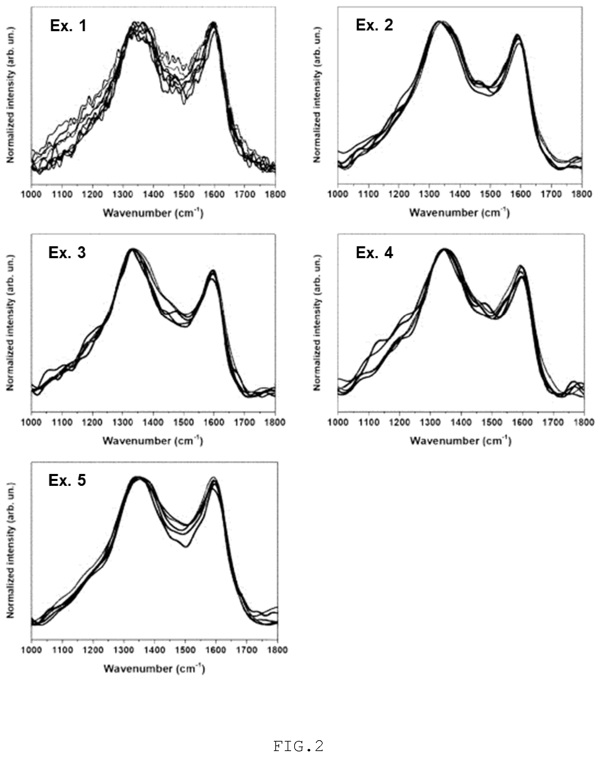

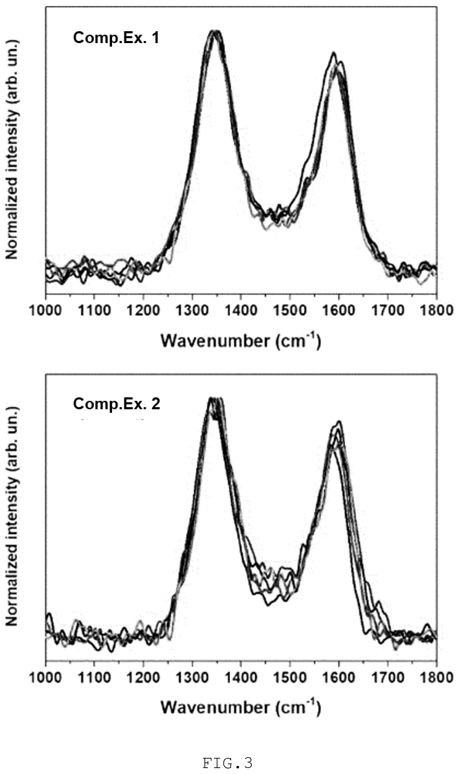

Furthermore, Raman spectra of the negative electrode material were measured at five different locations on the negative electrode material according to the embodiments and comparative examples, and the results are shown in Figures 2 and 3. The average values of the D-band intensity (I_{D}) and G-band intensity (I_{G}), the I_{D}/I_{G} ratio, and the F_{D}/F_{G} ratio were calculated from the Raman spectra of the negative electrode material and are listed in Table 3 below. Additionally, the FWHM of the D-band and G-band peaks is listed in Table 4.

Analysis conditions: excitation laser wavelength 532 nm, laser power 0.5 mW, spectrometer resolution 1 cm⁻¹, powder-form negative electrode material 1 g, detector exposure time 15 sec.

**[Table 2]**

| **Category** | **Raman spectra of the silicon-based cores (cm**⁻¹**)** | | | |
|---|---|---|---|---|
| | **WN(Si)_{MAX-MIN}** | **WN(Si)_{AVE} Standard deviation** | **W_{AVE}** | **W_{AVE} Standard deviation** |
| **Example 1** | 3.2 | 1.1 | 13.3 | 1.6 |
| **Example 2** | 5.1 | 1.8 | 15.3 | 1.8 |
| **Example 3** | 3.7 | 1.3 | 14.1 | 1.7 |
| **Example 4** | 4.2 | 1.3 | 15.8 | 2.3 |
| **Example 5** | 4.5 | 1.5 | 13.8 | 2.1 |
| **Example 6** | 3.7 | 1.3 | 16.5 | 2.7 |
| **Example 7** | 6.2 | 1.5 | 16.8 | 2.9 |
| **Comparative Example 1** | 10.3 | 3.5 | 19.2 | 6.4 |
| **Comparative Example 2** | 10.4 | 3.9 | 24.8 | 7.1 |
| **Comparative Example 3** | 8.8 | 3.4 | 22.8 | 5.7 |

**[Table 3]**

| **Mean: calculated by Max & Min exclusion** | | **Example** | | | | | | | **Comparative** Example | | |
|---|---|---|---|---|---|---|---|---|---|---|---|
| | | **1** | **2** | **3** | **4** | **5** | **6** | **7** | **1** | **2** | **3** |
| **I_{D}/I_{G}** | **Max** | 1.07 | 1.18 | 1.21 | 1.23 | 1.08 | 1.21 | 1.17 | 1.24 | 1.20 | 1.21 |
| | **Min** | 0.96 | 1.11 | 1.17 | 1.16 | 0.99 | 0.98 | 1.02 | 1.11 | 1.08 | 1.10 |
| | **Mean** | 1.00 | 1.13 | 1.20 | 1.20 | .04 | 1.18 | 1.09 | 1.17 | 1.15 | 1.16 |
| | **Deviation** | 0.03 | 0.03 | 0.02 | 0.03 | 0.03 | 0.03 | 0.03 | 0.04 | 0.03 | 0.03 |
| **F_{D}/F_{G}** | **Max** | 2.18 | 1.83 | 2.15 | 1.75 | 1.77 | 1.76 | 2.11 | 1.23 | 1.19 | 1.37 |
| | **Min** | 1.94 | 1. 64 | 1.84 | 1.57 | 1.61 | 1.55 | 1.71 | 1.18 | 1.13 | 1.28 |
| | **Mean** | 2.07 | 1.73 | 1.98 | 1. 63 | 1.70 | 1.67 | 1.81 | 1.21 | 1.16 | 1.32 |
| | **Deviation** | 0.08 | 0.07 | 0.02 | 0.06 | 0.06 | 0.06 | 0.06 | 0.02 | 0.02 | 0.03 |

**[Table 4]**

| **Mean: calculated by Max & Min exclusion** | | **Example** | | | | | | | **Comparative Example** | |
|---|---|---|---|---|---|---|---|---|---|---|
| | | **1** | **2** | **3** | **4** | **5** | **6** | **7** | **1** | **2** |
| **D band FWHM (cm⁻¹)** | Mean | 172.8 | 237.5 | 201.8 | 207.68 | 172.9 | 207.99 | 199.5 | 203.7 | 221.4 |
| **G band FWHM (cm⁻¹)** | Mean | 101.88 | 91.45 | 111.85 | 128.7 | 78.75 | 109.47 | 128.5 | 110.6 | 99.2 |

Referring to Figure 1 and Table 2 above, it was confirmed that the negative electrode material according to the embodiment exhibits a WN(Si)_{MAX} - WN(Si)_{MIN} value of 6.2 cm⁻¹ or less, a standard deviation of the average WN(Si) (WN(Si)_{AVE}) excluding WN(Si)_{MAX} and WN(Si)_{MIN} of 1.8 cm⁻¹ or less, W_{AVE} of less than 17 cm⁻¹, and a standard deviation of W_{AVE} of less than 3 cm⁻¹.

Furthermore, referring to FIGS. 2 and 3 and Table 3, it may be seen that, in the negative electrode material according to the embodiment, the intensity ratio (I_{D}/I_{G}) is, on average, smaller than the FWHM ratio (F_{D}/F_{G}), and the average FWHM is 1.3 or more.

Furthermore, as shown in Table 4, the average FWHM of the G-band peak (F_{G}) was found to be 60 cm⁻¹ or more.

### <Battery Manufacturing>

Using the final negative electrode material powder as an active material, the active material, a conductive agent (carbon black), carboxymethyl cellulose (CMC), and styrene-butadiene rubber (SBR) were mixed in a weight ratio of 8 : 1 : 0.5 : 0.5 to prepare a slurry, which was then coated onto a 17-µm-thick copper foil and dried at 90°C for 40 minutes. After drying, the electrode was punched into a 14-mm-diameter disc; a 16-mm-diameter lithium metal disc was used as a counter electrode; and an 18-mm-diameter separator was interposed therebetween, followed by injecting an electrolyte to manufacture a CR2032 coin-type half-cell. The electrolyte was prepared by dissolving 1 M LiPF₆ in a solvent consisting of a 1:1 volume mixture of EC (ethylene carbonate) and DEC (diethyl carbonate), with 3 wt% FEC (fluoroethylenecarbonate) added as an additive.

### <Battery Performance Evaluation>

The formation process was performed by charging (lithiation) the manufactured cell at a constant current of 0.1 C to 0.005 V, followed by constant-voltage charging at 0.005 V until the current reached 0.01 C, and then discharging (de-lithiation) at a constant current of 0.1 C to 1.5 V (first formation step); and subsequently, charging (lithiation) the cell at a constant current of 0.1 C to 0.005 V, followed by constant-voltage charging at 0.005 V until the current reached 0.01 C, and then discharging (de-lithiation) at a constant current of 0.1 C to 1.0 V (second formation step).

Half-cells that had undergone the formation process were charged (lithiation) to 0.005 V at a constant current of 0.5 C, then charged at a constant voltage of 0.005 V until reaching 0.05 C, and finally discharged (de- lithiation) to 1.0 V at a constant current of 0.5 C to evaluate their cycle characteristics, and the capacity retention was evaluated after a total of 30 charge/discharge cycles. The discharge capacity (initial capacity) of the first charge-discharge cycle and the initial coulombic efficiency of the first charge-discharge cycle were measured and are listed in Table 5 below. The capacity retention ((C25/C3) x 100, where C25 is the discharge capacity at the 25th charge-discharge cycle and C3 is the discharge capacity at the 3rd charge-discharge cycle) is also shown in Table 5 below.

**[Table 5]**

| **category** | **Electrochemical Properties of Cell** | | |
|---|---|---|---|
| | **Discharge Capacity (mAh/g)** | **Initial Coulombic Efficiency (ICE, %)** | **Capacity Retention (%)** |
| **Example 1** | 1,702 | 73.9 | 97.3 |
| **Example 2** | 1,730 | 74.1 | 99.6 |
| **Example 3** | 1,706 | 74.3 | 91.4 |
| **Example 4** | 1, 678 | 75.1 | 94.5 |
| **Example 5** | 1,730 | 74.7 | 99.9 |
| **Example 6** | 1,645 | 76.1 | 99.9 |
| **Example 7** | 1,644 | 74.3 | 92.1 |
| **Comparative Example 1** | 1,643 | 73.7 | 89.1 |
| **Comparative Example 2** | 1,651 | 73.9 | 85.7 |
| **Comparative Example 3** | 1,681 | 74.4 | 89.0 |

It was confirmed that the negative electrode materials according to the embodiments generally exhibited significantly superior electrochemical properties compared to the comparative examples, showing an initial discharge capacity of 1,700 mAh/g or higher, an initial coulombic efficiency of 74% or higher, and a capacity retention of 92% or higher.

## Claims

1. A negative electrode material for a secondary battery, comprising: a silicon-based core comprising a matrix comprising silicon oxide and silicon nanocrystals dispersedly embedded in the matrix; and
a carbon coating layer disposed on a surface of the silicon-based core,
wherein the negative electrode material satisfies the following Equation 1 and Equation 2: $WN {\left(Si\right)}_{MAX} - WN {\left(Si\right)}_{MIN} \leq 7 {cm}^{- 1}$
(in Equation 1, WN(Si) is a wavenumber corresponding to a maximum scattering intensity in a Raman spectrum, which is located in a wavenumber range of 460 cm⁻¹ to 560 cm⁻¹, of the silicon-based core, and WN(Si)_{MAX} and WN(Si)_{MIN} are a maximum value and a minimum value of WN(Si) calculated from each of the Raman spectra measured at 10 different locations); and ${W}_{AVE} \leq 17 {cm}^{- 1}$
(in Equation 2, W_{AVE} is an average value of widths of the Raman spectra corresponding to 75% of a maximum scattering intensity value based on a Raman scattering intensity at a wavenumber of 560 cm⁻¹ in each of the Raman spectra measured at the 10 different locations).

2. The negative electrode material for a secondary battery according to claim 1, wherein, in a Raman spectrum of the negative electrode material, an intensity ratio (I_{D}/I_{G}) of a D-band peak to a G-band peak is 1.3 or less, and the intensity ratio (I_{D}/I_{G}) is less than a full width at half maximum (FWHM) ratio (F_{D}/F_{G}) of the D-band peak to the G-band peak.

3. The negative electrode material for a secondary battery according to claim 2, wherein the FWHM ratio (F_{D}/F_{G}) of the D-band peak to the G-band peak is 1.4 or more.

4. The negative electrode material for a secondary battery according to claim 2, wherein the FWHM of the G-band peak (F_{G}) is 60 cm⁻¹ or more.

5. The negative electrode material for a secondary battery according to claim 1, wherein a standard deviation of W_{AVE} is 5 cm⁻¹ or less.

6. The negative electrode material for a secondary battery according to claim 1, wherein the negative electrode material further satisfies the following Equation 3: $1 > WN {\left(Si\right)}_{AVE} / WN \left(ref\right)$ (in Equation 3, WN(Si)_{AVE} is an average value of WN(Si), and WN(ref) is a wavenumber corresponding to a maximum scattering intensity in a Raman spectrum, which is located in a wavenumber range of 460 cm⁻¹ to 560 cm⁻¹, of bulk single-crystal silicon).

7. The negative electrode material for a secondary battery according to claim 6, wherein a specific surface area of the negative electrode material is 10 m²/g or less.

8. The negative electrode material for a secondary battery according to claim 1, wherein the carbon coating layer comprises a plurality of carbon nanoparticles.

9. The negative electrode material for a secondary battery according to claim 8, wherein the carbon coating layer comprises a dispersed phase comprising a plurality of carbon nanoparticles and a continuous phase consisting of carbon and physically binding the dispersed phase.

10. The negative electrode material for a secondary battery according to claim 1, wherein the carbon coating layer is contained in an amount of 0.5 to 8 wt% based on a total weight of the negative electrode material.

11. The negative electrode material for a secondary battery according to claim 1, wherein the carbon coating layer is derived from coal tar or petroleum-based residue.

12. The negative electrode material for a secondary battery according to claim 1, wherein a D₁ particle size of the negative electrode material is 0.8 to 5 µm, and D₁₀/D₁ is 1 to 3.

13. The negative electrode material for a secondary battery according to claim 1, wherein a D₉₀ particle size of the negative electrode material is 8.5 to 25 µm, and D₉₉/D₉₀ is 1.1 to 3.

14. A secondary battery comprising the negative electrode material for a secondary battery according to any one of claims 1 to 13.
